# EUROPÄISCHE PATENTSCHRIFT

(11) **EP 4 577 752 B1**
(45) Veröffentlichungstag und Bekanntmachung des Hinweises auf die Patenterteilung: **20.05.2026**
(21) Anmeldenummer: 23741286.1
(22) Anmeldetag: 05.07.2023
(51) Int. Cl.: F16D 57/00

(54) **VORRICHTUNG MIT EINER MAGNETORHEOLOGISCHEN ÜBERTRAGUNGSEINRICHTUNG**
APPARATUS HAVING A MAGNETORHEOLOGICAL TRANSMISSION DEVICE
APPAREIL COMPORTANT UN DISPOSITIF DE TRANSMISSION MAGNÉTORHÉOLOGIQUE

(30) Priorität: 25.08.2022 DE 102022121536
(43) Veröffentlichungstag der Anmeldung: 02.07.2025
(73) Patentinhaber: INVENTUS Engineering GmbH, 6771 St. Anton i.M. (AT)
(72) Erfinder: HAAG, Johannes, 6780 Schruns (AT); BATTLOGG, Stefan, 6771 St. Anton i.M. (AT)
(74) Vertreter: BSB Patentanwälte Schütte & Engelen Partnerschaft mbB
(86) Internationale Anmeldenummer: PCT/EP2023/068597
(87) Internationale Veröffentlichungsnummer: WO 2024/041792

(56) Entgegenhaltungen:
- WO-A1-2016/156544
- CN-A- 111 765 183
- CN-A- 114 934 963
- KR-A- 20190 047 930

## Beschreibung

Die Erfindung betrifft eine Vorrichtung mit wenigstens einer magnetorheologischen Übertragungseinrichtung mit wenigstens zwei relativ zueinander bewegbaren Drehkomponenten. Zwischen den Drehkomponenten ist wenigstens ein Wirkspalt ausgebildet, in welchem ein magnetorheologisches Medium angeordnet ist. Mittels wenigstens einer elektrischen Spuleneinrichtung ist im Wirkspalt ein steuerbares Magnetfeld erzeugbar, um die Drehbarkeit der Drehkomponenten im Normalbetrieb zu beeinflussen.

Eine gattungsgemäße Vorrichtung ist aus der WO 2016/156544 A1 bekannt. Solche Vorrichtungen können z. B. als Bedieneinrichtung ausgebildet sein und zur Einstellung von Bedienzuständen dienen. Dann können mittels der magnetorheologischen Übertragungseinrichtung zum Beispiel unterschiedliche Momente bzw. Kräfte, Anschläge und Rasterungen für die Bewegungen eingestellt werden. So kann bei der Bedienung eine haptische (spürbare) Rückmeldung übermittelt werden, welche den Benutzer unterstützt und sehr gezielte Einstellungen erlaubt und insgesamt die Bedienkomplexität reduziert. Solche Bedieneinrichtungen finden immer häufiger in verschiedensten Geräten und beispielsweise in Kraftfahrzeugen oder der Medizintechnik oder auch bei Smart Devices Verwendung, um beispielsweise Menüs auszuwählen oder präzise Steuerungen vorzunehmen. Zudem werden solche Vorrichtungen immer öfter bei der Bedienung von Computern und Spielekonsolen eingesetzt. Die Vorrichtung soll daher sehr kompakt und zugleich zuverlässig konstruiert sein und ein möglichst geringes Grundmoment aufweisen.

Beispielsweise können solche Vorrichtungen auch als Lenkvorgabeeinrichtung zum Vorgeben einer Lenkbewegung nach dem Steer-by-Wire-Konzept eingesetzt werden. An solche Lenkvorgabeeinrichtungen werden hohe Anforderungen gestellt. So werden beispielsweise präzise Lenkrückmeldungen und ein spielfreies bzw. ruckfreies Lenkverhalten besonders um die Mittellage sowie ein insgesamt sehr leichtgängiges harmonisches Lenkverhalten gefordert. Wenn die Lenkeinheit generell (mechanisch) schwergängig ausgelegt wird (= hohes Grundmoment) ist eine haptisch einwandfreie Regelbarkeit im Normalbetrieb (aktives Rückstellen...) nicht mehr möglich. Nur sehr leichtgängige Lenkeinheiten (bevorzugt < 0,1 Nm Grundmoment sämtlicher Steer-by-Wire Lenkkomponenten) ermöglichen haptisch anspruchsvolle und harmonische Lenkbewegungen. Zudem muss die Lenkeinrichtung hohe Drehmomente bereitstellen bzw. der manuellen Lenkbewegung entgegen stellen können (das Drehmoment entspricht dann einem Bremsmoment). Das ist z. B. zur Darstellung von Endanschlägen, für das Abstützen beim Aussteigen oder als Gegenmoment bei sehr schnellen Verdrehungen bzw. Lenkbewegungen.

Ein entscheidendes Merkmal solcher Vorrichtungen ist die Sicherheit bei einem Störfall und beispielsweise bei einem Ausfall der Spuleneinrichtung (sog. Failsafe-Fall). Dann wird der Drehbewegung bzw. Lenkbewegung kein Drehmoment mehr entgegengesetzt und es wird bei der Bedienung kein Widerstand mehr verspürt. Um solche mitunter sehr gefährlichen Situationen zu entschärfen, kann eine Störfallsicherung zum Bremsen der Drehbarkeit der Drehkomponenten bei einem Störfall eingesetzt werden. Allerdings führt die konstruktive Integration der Störfallsicherung häufig zu einer Zunahme an Bauraum und Gewicht sowie zu einer Erhöhung des Grundmoments.

Es ist daher die Aufgabe der vorliegenden Erfindung, eine Vorrichtung mit einer verbesserten Störfallsicherung zur Verfügung zu stellen, welche die zuvor diskutierten Anforderungen besonders vorteilhaft erfüllt.

Diese Aufgabe wird gelöst durch eine Vorrichtung mit den Merkmalen des Anspruchs 1. Bevorzugte Weiterbildungen der Erfindung sind Gegenstand der Unteransprüche. Weitere Vorteile und Merkmale der vorliegenden Erfindung ergeben sich aus der allgemeinen Beschreibung und aus der Beschreibung der Ausführungsbeispiele.

Die erfindungsgemäße Vorrichtung umfasst wenigstens eine magnetorheologische Übertragungseinrichtung. Die Übertragungseinrichtung umfasst wenigstens zwei relativ zueinander bewegbare Drehkomponenten. Zwischen den Drehkomponenten ist wenigstens ein Wirkspalt ausgebildet. Im Wirkspalt ist wenigstens ein magnetorheologisches Medium angeordnet. Die Vorrichtung umfasst wenigstens eine elektrische Spuleneinrichtung zur Erzeugung eines steuerbaren Magnetfelds im Wirkspalt. Insbesondere dient die Erzeugung des Magnetfelds dazu, die Drehbarkeit der Drehkomponenten im Normalbetrieb zu beeinflussen (und vorzugsweise zu bremsen oder freizugeben). Die Vorrichtung umfasst wenigstens eine Störfallsicherung zum Bremsen der Drehbarkeit der Drehkomponenten bei einem Störfall. Dabei ist die Störfallsicherung dazu geeignet und ausgebildet, mittels wenigstens einer Magnetfelderzeugungseinrichtung ein Magnetfeld zu erzeugen und mit dem Magnetfeld das im Wirkspalt angeordnete magnetorheologische Medium zu beeinflussen. Insbesondere wird dadurch die Drehbarkeit der Drehkomponenten mit einem Störfallbremsmoment gebremst.

Die erfindungsgemäße Vorrichtung bietet viele Vorteile. Einen erheblichen Vorteil bietet die Störfallsicherung mit ihrer Magnetfelderzeugungseinrichtung. Eine solche magnetorheologische Störfallsicherung kann viel kompakter und leichter als beispielsweise eine mechanische Störfallsicherung ausgeführt werden. Ein weiterer Vorteil ist, dass die Magnetfelderzeugungseinrichtung auf das im Wirkspalt angeordnete magnetorheologische Medium einwirkt. Eine solche konstruktive Integration der Störfallsicherung in die magnetorheologische Übertragungseinrichtung benötigt wenig Bauteile und Bauraum.

Es ist bevorzugt und vorteilhaft, dass das Magnetfeld der Spuleneinrichtung und das Magnetfeld der Magnetfelderzeugungseinrichtung auf denselben Wirkspalt und vorzugsweise auch auf dasselbe magnetorheologische Medium einwirken. Insbesondere ist ein gemeinsamer Wirkspalt für die Übertragungseinrichtung und die Störfallsicherung vorgesehen. Insbesondere stellt der zwischen den Drehkomponenten ausgebildete Wirkspalt auch den Wirkspalt für die Störfallsicherung bereit. Insbesondere ist der Wirkspalt umlaufend um eine der Drehkomponenten ausgebildet. Der Wirkspalt kann wenigstens einen oder auch wenigstens zwei oder mehr Spaltabschnitte aufweisen. Dabei kann das Magnetfeld der Magnetfelderzeugungseinrichtung auf denselben Spaltabschnitt und/oder auf einen anderen (benachbarten) Spaltabschnitt des Wirkspalts einwirken. Insbesondere sind die Spaltabschnitte miteinander verbunden und insbesondere strömungsverbunden.

Insbesondere verlaufen das Magnetfeld der Spuleneinrichtung und das Magnetfeld der Magnetfelderzeugungseinrichtung durch die Drehkomponenten und den Wirkspalt (und insbesondere durch das im Wirkspalt aufgenommene magnetorheologische Medium).

Vorzugsweise verlaufen das Magnetfeld der Spuleneinrichtung und das Magnetfeld der Magnetfelderzeugungseinrichtung durch einen gemeinsamen Magnetkreis. Dadurch kann im Störfall auch eine Kompensation des Magnetfelds der Spuleneinrichtung durch das Magnetfeld der Magnetfelderzeugungseinrichtung erfolgen. Das ist z. B. bei ungewollter maximaler Bestromung der Spuleneinrichtung sehr hilfreich. Bei separaten Magnetkreisen wäre das so nicht (ohne Weiteres) möglich.

Möglich und bevorzugt ist auch, dass das Magnetfeld der Spuleneinrichtung und das Magnetfeld der Magnetfelderzeugungseinrichtung durch jeweils wenigstens einen Magnetkreis verlaufen und dass sich diese Magnetkreise wenigstens abschnittsweise überlappen. Insbesondere stellen die Drehkomponenten jeweils wenigstens einen Abschnitt des Magnetkreises bereit. Insbesondere überlappen sich die Magnetkreise wenigstens in einer der Drehkomponenten und vorzugsweise in beiden Drehkomponenten.

Innerhalb des Magnetkreises verlaufen die Feldlinien wenigstens abschnittsweise parallel zueinander. Insbesondere weist der Magnetkreis eine homogene Verteilung der Feldlinien auf (insbesondere im Vergleich zu den Feldlinien in Luft). Insbesondere fließen die Magnetfelder durch einen geschlossenen Magnetkreis.

In einer besonders vorteilhaften Weiterbildung umfasst die Magnetfelderzeugungseinrichtung wenigstens eine elektrische Zusatzspuleneinrichtung zur Erzeugung des Magnetfelds. Insbesondere ist die Störfalleinrichtung dazu geeignet und ausgebildet, die Zusatzspuleneinrichtung in Abhängigkeit eines Betriebszustands der Spuleneinrichtung anzusteuern.

Insbesondere ist die Zusatzspuleneinrichtung kleiner und/oder mit einer geringeren Leistung als die Spuleneinrichtung ausgebildet. Insbesondere ist das Störfallbremsmoment kleiner und vorzugsweise wenigstens um das zweifache kleiner als ein (betriebsgemäß vorgesehenes) maximales Übertragungsmoment bzw. Bremsmoment der Übertragungseinrichtung.

Insbesondere umfassen die Zusatzspuleneinrichtung und die Spuleneinrichtung jeweils wenigstens eine separate Versorgungsleitung zur Versorgung mit (elektrischer) Energie. Insbesondere treten die Versorgungsleitungen an unterschiedlichen Orten und vorzugsweise an unterschiedlichen axialen Stirnseiten aus einer der Drehkomponenten aus.

Die Störfallsicherung umfasst vorzugsweise wenigstens einen (elektrischen) Energiespeicher zur Energieversorgung der Zusatzspuleneinrichtung. Insbesondere stellt der Energiespeicher eine Energieversorgung bereit, welche von einer Energieversorgung der Spuleneinrichtung unabhängig ist. Der Energiespeicher umfasst insbesondere wenigstens einen Akku und/oder wenigstens eine Batterie und/oder wenigstens einen Kondensator oder dergleichen. Möglich ist auch, dass die Zusatzspuleneinrichtung und die Spuleneinrichtung über eine gemeinsame Quelle mit Energie versorgt werden. Dann sind insbesondere separate Versorgungsleitungen vorgesehen.

In einer vorteilhaften Ausgestaltung umfasst wenigstens eine der Drehkomponenten wenigstens eine Spulenaufnahme. Insbesondere ist in der Spulenaufnahme wenigstens die Spuleneinrichtung untergebracht. Vorzugsweise ist in der Spulenaufnahme auch die Zusatzspuleneinrichtung untergebracht.

Die Spulenaufnahme ist insbesondere als ein (integraler) Bestandteil einer der Drehkomponenten ausgebildet. Die Spulenaufnahme umfasst insbesondere wenigstens einen Aufnahmeraum und insbesondere wenigstens eine den Aufnahmeraum wenigstens teilweise umgebende Wandungsanordnung. Insbesondere ist die Spulenaufnahme (vorzugsweise wenigstens die Wandungsanordnung) wenigstens teilweise magnetisch leitfähig ausgebildet.

Der magnetisch leitfähige Bereich der Spulenaufnahme kann mit einer in den Wirkspalt ragenden Kontur ausgestattet sein. Durch die Kontur kann sich eine in Umfangsrichtung veränderliche Spalthöhe ergeben. Die Kontur kann beispielsweise als eine Sternkontur oder dergleichen ausgebildet sein.

In einer vorteilhaften Weiterbildung umfasst die Spulenaufnahme einen gemeinsamen Aufnahmeraum für die Spuleneinrichtung und die Zusatzspuleneinrichtung. Insbesondere sind die Spuleneinrichtung und die Zusatzspuleneinrichtung dabei von einer gemeinsamen Wandungsanordnung umgeben.

Möglich und vorteilhaft ist auch, dass die Spulenaufnahme wenigstens einen Aufnahmeraum für die Spuleneinrichtung und wenigstens einen Aufnahmeraum für die Zusatzspuleneinrichtung aufweist. In Ausgestaltungen ohne eine Zusatzspuleneinrichtung ist insbesondere nur der Aufnahmeraum für die Spuleneinrichtung vorgesehen. Die Aufnahmeräume sind insbesondere wenigstens teilweise räumlich getrennt. Insbesondere ist wenigstens eine Trennwand dazwischen angeordnet, welche vorzugsweise magnetisch leitfähig ausgebildet ist. Die Trennwand wird insbesondere von der Drehkomponente bereitgestellt. Insbesondere sind die Aufnahmeräume axial nebeneinander angeordnet.

In einer bevorzugten Weiterbildung sind die Spuleneinrichtung und die Zusatzspuleneinrichtung in einer gemeinsamen Wicklungsanordnung untergebracht. Vorzugsweise sind die Spuleneinrichtung und die Zusatzspuleneinrichtung in der Wicklungsanordnung axial nebeneinander aufgewickelt. Insbesondere liegen die Spuleneinrichtung und die Zusatzspuleneinrichtung axial nebeneinander im gemeinsamen Aufnahmeraum. Das ermöglicht besonders kompakte radiale Abmessungen.

Möglich und bevorzugt ist auch, dass die Spuleneinrichtung und die Zusatzspuleneinrichtung in der Wicklungsanordnung koaxial zueinander aufgewickelt sind. Dabei sind die Zusatzspuleneinrichtung und die Spuleneinrichtung in Bezug auf die radiale Richtung wenigstens teilweise fluchtend angeordnet. Beispielsweise kann sich die Zusatzspuleneinrichtung radial innen befinden, während die Spuleneinrichtung radial außen angeordnet ist und die Zusatzspuleneinrichtung in Umfangsrichtung umschließt. Möglich ist auch eine umgekehrte Anordnung, bei welcher die Spuleneinrichtung radial innen und die Zusatzspuleneinrichtung radial außen angeordnet ist. Das ermöglicht besonders kompakte axiale Abmessungen.

Es ist möglich, dass die Spuleneinrichtung und die Zusatzspuleneinrichtung magnetisch voneinander abgeschirmt (isoliert) sind. Die Spuleneinrichtung und die Zusatzspuleneinrichtung können durch eine magnetisch nicht leitende Schicht, z. B. aus Kunststoff oder einer magnetisch nicht leitenden Vergussmasse, voneinander getrennt sein.

In einer weiteren vorteilhaften Ausführung ist vorgesehen, dass die Spuleneinrichtung und die Zusatzspuleneinrichtung in der Wicklungsanordnung ineinandergewickelt sind. Mit anderen Worten, die Spuleneinrichtung und die Zusatzspuleneinrichtung können ohne Abwickeln nicht voneinander getrennt werden.

Insbesondere umfasst die Wicklungsanordnung wenigstens einen elektrischen Leiter für die Spuleneinrichtung und wenigstens einen elektrischen Leiter für die Zusatzspuleneinrichtung. Die Leiter sind insbesondere voneinander elektrisch isoliert. Die Leiter haben insbesondere jeweils eine separate Energieversorgung. Entsprechend der zuvor beschriebenen Wicklungsanordnungen können die unterschiedlichen Leiter axial nebeneinander oder koaxial zueinander aufgewickelt oder ineinander gewickelt sein. Bei der ineinander gewickelten Wicklungsanordnung liegen dann Abschnitte des einen Leiters zwischen den Abschnitten des anderen Leiters. Die Leiter sind sozusagen durchmischt.

Es ist möglich und vorteilhaft, dass die Magnetfelderzeugungseinrichtung wenigstens eine Permanentmagneteinrichtung zur Bereitstellung des Magnetfelds umfasst. Insbesondere ist die Störfallsicherung dazu geeignet und ausgebildet, das Magnetfeld der Permanentmagneteinrichtung im Normalbetrieb mittels der Spuleneinrichtung und/oder mittels der Zusatzspuleneinrichtung abzuschwächen oder zu eliminieren. Insbesondere wird dazu von der Spuleneinrichtung und/oder der Zusatzspuleneinrichtung ein Magnetfeld erzeugt, welches dem Magnetfeld der Permanentmagneteinrichtung gezielt entgegenwirkt. Eine solche Permanentmagneteinrichtung hat den Vorteil, dass bei einem Ausfall der Stromversorgung der Spuleneinrichtung automatisch das Magnetfeld für das Störfallbremsmoment bereitsteht. Auf Sensormittel oder Verschaltungen zur Erkennung des Störfalls kann gegebenenfalls verzichtet werden.

Es kann vorgesehen sein, dass die Spuleneinrichtung im Normalbetrieb ein Magnetfeld erzeugt, welches zum gezielten Beeinflussen der Drehbarkeit der Drehkomponenten dient und zugleich das Magnetfeld der Permanentmagneteinrichtung abschwächt. Dann kann auf die Zusatzspuleneinrichtung verzichtet werden.

Möglich und bevorzugt ist aber auch, dass die Abschwächung des Magnetfeldes der Permanentmagneteinrichtung im Normalbetrieb von der Zusatzspuleneinrichtung übernommen wird. Die Zusatzspuleneinrichtung kann dabei ausschließlich für das entgegenwirkende Magnetfeld im Normalbetrieb vorgesehen sein. Möglich ist aber auch, dass die Zusatzspuleneinrichtung bei einem Störfall zusätzlich zur Permanentmagneteinrichtung wirkt und beispielsweise deren Magnetfeld unterstützt. Wie nachfolgend noch näher beschrieben, kann das Magnetfeld der Permanentmagneteinrichtung und/oder der Zusatzspuleneinrichtung im Normalbetrieb auch zur Unterstützung des Magnetfeldes der Zusatzspuleneinrichtung vorgesehen sein.

Es können auch zwei Zusatzspuleneinrichtungen vorgesehen sein, sodass die eine für die Abschwächung im Normalbetrieb und die andere für das Störfallbremsmoment bereitsteht.

Es ist möglich, dass die Permanentmagneteinrichtung durch ein Bauteil mit magnetischen Remanenzeigenschaften bereitgestellt wird (sog. Remanenzeinrichtung). Aufgrund der Remanenzeigenschaften behält das Bauteil den jeweiligen magnetischen Zustand dauerhaft bzw. wenigstens so lange, bis es erneut entmagnetisiert bzw. magnetisiert wird. Ein solches Bauteil kann durch die Spuleneinrichtung und/oder die Zusatzspuleneinrichtung bei Bedarf magnetisiert bzw. entmagnetisiert werden. Das Bauteil ist beispielsweise eine der Drehkomponenten oder ein Abschnitt einer solchen.

Die Permanentmagneteinrichtung ist insbesondere ringförmig ausgebildet. Insbesondere umfasst die Permanentmagneteinrichtung wenigstens einen Permanentmagneten. Beispielsweise ist ein Ringmagnet vorgesehen. Insbesondere ist die Permanentmagneteinrichtung koaxial zur Drehachse der Übertragungseinrichtung angeordnet. Die Permanentmagneteinrichtung kann axial polarisiert (bzw. axial aufmagnetisiert) oder radial polarisiert (bzw. radial aufmagnetisiert) sein.

Insbesondere ist die Permanentmagneteinrichtung axial neben der Spuleneinrichtung und/oder der Zusatzspuleneinrichtung angeordnet. Die Permanentmagneteinrichtung kann in Bezug auf die axiale Richtung wenigstens teilweise fluchtend mit der Spuleneinrichtung und/oder der Zusatzspuleneinrichtung angeordnet sein. Möglich ist aber auch eine versetzte Anordnung in Bezug auf die axiale Richtung.

Insbesondere ist die Permanentmagneteinrichtung in radialer Richtung von der Spuleneinrichtung und/oder der Zusatzspuleneinrichtung umschlossen. Möglich ist auch, dass die Permanentmagneteinrichtung in radialer Richtung die Spuleneinrichtung und/oder die Zusatzspuleneinrichtung umschließt. Mit anderen Worten, die Permanentmagneteinrichtung ist in Bezug auf die radiale Richtung wenigstens teilweise fluchtend mit der Spuleneinrichtung und/oder der Zusatzspuleneinrichtung angeordnet. Möglich ist aber auch eine versetzte Anordnung in Bezug auf die radiale Richtung. Vorzugsweise sind diese Komponenten in allen Ausführungen koaxial zueinander und auch koaxial zur Drehachse der Übertragungseinrichtung angeordnet. Vorzugsweise ist die Permanentmagneteinrichtung (in radialer Richtung) wenigstens teilweise von wenigstens einem der Aufnahmeräume umschlossen.

In einer vorteilhaften Weiterbildung ist der Permanentmagneteinrichtung wenigstens eine magnetische Flussbarriere zugeordnet. Insbesondere ist die Flussbarriere dazu geeignet und ausgebildet, einen magnetischen Kurzschluss zwischen der Permanentmagneteinrichtung und der die Permanentmagneteinrichtung tragenden Drehkomponente zu verhindern. Insbesondere erstreckt sich die Flussbarriere scheibenförmig um die Drehachse der Übertragungseinrichtung. Insbesondere erstreckt sich die Flussbarriere scheibenförmig durch die Drehkomponente.

Insbesondere sind die Permanentmagneteinrichtung und die Flussbarriere koaxial zueinander (und vorzugsweise koaxial zur Drehachse der Übertragungseinrichtung) angeordnet. Insbesondere ist die Permanentmagneteinrichtung in radialer Richtung wenigstens teilweise von der Flussbarriere umschlossen oder umschließt diese in radialer Richtung wenigstens teilweise. Die Flussbarriere ist insbesondere in der Drehkomponente ausgebildet, welche die Permanentmagneteinrichtung trägt und/oder welche die zur Erzeugung des entgegen wirkenden Magnetfelds vorgesehene (Zusatz-) Spuleneinrichtung trägt.

Die Flussbarriere ist vorzugsweise als ein Luftspalt ausgebildet oder umfasst wenigstens einen solchen. Möglich ist auch ein anderer geeigneter magnetisch nicht leitfähiger Werkstoff. Die Flussbarriere bzw. der Luftspalt ist vorzugsweise mindestens so groß, dass der magnetische Widerstand größer oder gleich dem magnetischen Widerstand des (Wirk-) Spaltes ist. Ansonsten könnte es dazu kommen, dass die Magnetfeldlinien über die Flussbarriere geschlossen werden.

Es ist möglich und vorteilhaft, dass die Flussbarriere durch die Permanentmagneteinrichtung bereitgestellt wird. Insbesondere erstreckt sich die Permanentmagneteinrichtung bis zu einem radial inneren und/oder radial äußeren Ende der Drehkomponente. Auch dadurch kann ein magnetischer Kurzschluss zuverlässig vermieden werden.

Es ist bevorzugt und vorteilhaft, dass die Störfallsicherung dazu geeignet und ausgebildet ist, das Magnetfeld der Spuleneinrichtung mittels der Zusatzspuleneinrichtung (gesteuert) zu verringern. Insbesondere wird dadurch bei einem Störfall einer unerwünscht großen Bremswirkung entgegengewirkt. Vorzugsweise verlaufen die Magnetfelder der Spuleneinrichtung und der Zusatzspuleneinrichtung dabei in einem gemeinsamen Magnetkreis. In einer vorteilhaften Weiterbildung ist wenigstens eine Steuereinrichtung vorgesehen, welche dazu geeignet und ausgebildet ist, das Magnetfeld der Magnetfelderzeugungseinrichtung im Normalbetrieb zur Unterstützung des Magnetfelds der Spuleneinrichtung heranzuziehen. Das kann das Magnetfeld der Permanentmagneteinrichtung und/oder der Zusatzspuleneinrichtung sein. Eine solche Unterstützung kann beispielsweise dadurch erfolgen, dass die Zusatzspuleneinrichtung im Normalbetrieb aktiviert wird. Zusätzlich oder alternativ kann eine solche Unterstützung auch dadurch erfolgen, dass das Magnetfeld der Permanentmagneteinrichtung im Normalbetrieb nicht oder gezielt weniger abgeschwächt wird.

Im Rahmen der vorliegenden Erfindung wird unter einem Störfall insbesondere ein Ausfall der Spuleneinrichtung verstanden.

Insbesondere kommt es dabei zu einem Wegfall des Magnetfelds der Spuleneinrichtung. Die Störfallsicherung dient insbesondere dazu, dass die Drehkomponenten bei einem Störfall weder blockiert sind noch widerstandslos bewegt werden können. Ohne die hier vorgestellte Störfallsicherung wären die Drehkomponenten bei einem Störfall (abgesehen von dem Grundmoment) frei drehbar. Es ist möglich, dass der Ausfall der Spuleneinrichtung gewollt ist (z. B. bei einem Ausschalten der Vorrichtung). Dann stellt die Störfallsicherung vorzugsweise eine Feststellbremse bereit, welche die Drehkomponenten gegen ein ungewolltes Bewegen sichert. Insbesondere ist die Störfallsicherung dazu geeignet und ausgebildet, das Magnetfeld der Spuleneinrichtung durch das Magnetfeld der Magnetfelderzeugungseinrichtung wenigstens teilweise zu ersetzen und/oder zu unterstützen. Insbesondere kann die Magnetfelderzeugungseinrichtung ein Magnetfeld bereitstellen, wenn das Magnetfeld der Spuleneinrichtung im Störfall wegfällt. Insbesondere kann die Magnetfelderzeugungseinrichtung ein Magnetfeld bereitstellen, welches das Magnetfeld der Spuleneinrichtung im Normalbetrieb unterstützt und/oder im Störfall abschwächt.

Insbesondere ist die Störfalleinrichtung dazu geeignet und ausgebildet, den Störfall und insbesondere den Ausfall der Spuleneinrichtung zu erfassen (z. B. mit einem Sensormittel).

Insbesondere ist die Störfallsicherung dazu geeignet und ausgebildet, bei Erfassung des Störfalls automatisch die Drehbarkeit der Drehkomponenten mit dem Störfallbremsmoment zu bremsen. Es kann eine Verschaltung vorgesehen sein, welche bei einem Ausfall der Stromversorgung der Spuleneinrichtung automatisch die Zusatzspuleneinrichtung aktiviert, um mit dem Störfallbremsmoment zu bremsen.

Insbesondere ist mit der Übertragungseinrichtung eine Kraftübertragung bzw. Drehmomentübertragung gezielt veränderbar. Insbesondere ist mittels der Spuleneinrichtung und deren Magnetfeld im Wirkspalt die Kraftübertragung bzw. die Drehmomentübertragung zwischen den Drehkomponenten einstellbar. Insbesondere ergibt sich dadurch auch eine Veränderung des Bewegungswiderstands für die Drehbarkeit der Drehkomponenten. Die Übertragungseinrichtung kann als eine Kupplungseinrichtung oder als eine Bremseinrichtung eingesetzt werden. Dann dienen die Drehkomponenten insbesondere als Kupplungskomponenten bzw. als Bremskomponenten und können als solche bezeichnet werden. Das Drehmoment kann auch als Bremsmoment bzw. Kupplungsmoment bezeichnet werden.

Die Vorrichtung kann als eine Bedieneinrichtung zur Einstellung von Bedienzuständen mittels Drehbewegungen und/oder Linearbewegungen (welche in Drehbewegungen umgesetzt werden) ausgebildet sein. Insbesondere ist der Bewegungswiderstand der Drehbewegung gezielt einstellbar. Eine solche Bedieneinrichtung ist beispielsweise ein Drehknopf oder ein Joystick oder dergleichen. Eine als Kupplungseinrichtung ausgebildete Vorrichtung kann beispielsweise in einer Lenkvorgabeeinrichtung zum Vorgeben einer Lenkbewegung nach dem Steer-by-Wire-Konzept eingesetzt werden. Dann ist insbesondere eine der Drehkomponenten mit einem Antrieb und eine der Drehkomponenten mit einem Abtrieb koppelbar.

In einer vorteilhaften Anwendung der erfindungsgemäßen Vorrichtung kann die Übertragungseinrichtung als Bremseinrichtung eines Scharniers vorgesehen sein. Dabei ist der Bremswiderstand der Drehbewegung des Scharniers (bzw. von an der jeweiligen Drehkomponente der Übertragungseinrichtung fixierten Komponenten) vorzugsweise gezielt einstellbar. In diesem Zusammenhang kann der Störfall alternativ als Feststellbremsfall bezeichnet werden, in dem die Störfallbremseinrichtung (= Feststellbremseinrichtung) im unbestromten Fall der Spule ein (hohes, insbesondere maximales) Bremsmoment (Feststellbremsmoment) bereitstellt. Der Normalfall kann in diesem Zusammenhang als Stellungsveränderungsfall bezeichnet werden, in dem das Scharnier leichtgängig betätigbar ist. Vorzugsweise ist die Feststellbremseinrichtung durch die erwähnte Permanentmagneteinrichtung und/oder die erwähnte Remanenzeinrichtung bereitgestellt, sodass im Feststellbremsfall kein Strom wirkt und dennoch eine Bewegung von jeweils mit dem Scharnier verbundenen Komponenten mit dem Feststellbremsmoment gegeneinander gebremst sind. Durch eine Abschwächung des Permanentmagnets bzw. der Remanenzeinrichtung mittels der Spuleneinrichtung kann das Scharnier zur (leichten) Bewegung der Komponenten relativ zueinander vorzugsweise auf ein vermindertes Bremsmoment eingestellt werden. Dadurch kann das Scharnier mit besonders wenig Kraftaufwand betätigt werden (=Stellungsveränderungsfall). In der gewünschten Relativstellung des Scharniers wird die Bestromung der Spuleneinrichtung vorzugsweise wieder beendet und so insbesondere eine (energiesparende bzw. keine Energie benötigende) Fixierung in einer neuen Feststellposition hervorgerufen. Die Einstellung der Feststellpositionen ist vorzugsweise über den gesamten Betätigungsbereich des Scharniers in jeder gewünschten bzw. vorgesehenen Stellung realisierbar.

Der folgende Gegenstand wird beansprucht: Vorrichtung, umfassend wenigstens eine magnetorheologische Übertragungseinrichtung mit wenigstens zwei relativ zueinander bewegbaren Drehkomponenten, wobei zwischen den Drehkomponenten wenigstens ein Wirkspalt ausgebildet ist und wobei im Wirkspalt ein magnetorheologisches Medium angeordnet ist, und umfassend wenigstens eine elektrische Spuleneinrichtung zur Erzeugung eines steuerbaren Magnetfelds im Wirkspalt, um die Drehbarkeit der Drehkomponenten im Normalbetrieb (bzw. in einem Stellungsveränderungsfall) zu beeinflussen, und umfassend wenigstens eine Feststellbremseinrichtung zum Bremsen der Drehbarkeit der Drehkomponenten bei einem Wegfall (NichtVorhandensein) des Magnetfelds der elektrischen Spuleneinrichtung (bzw. unabhängig vom Magnetfeld der elektrischen Spuleneinrichtung bzw. bei inaktiver Spuleneinrichtung); wobei die Feststellbremseinrichtung dazu geeignet und ausgebildet ist, mittels wenigstens einer Magnetfelderzeugungseinrichtung ein Magnetfeld zu erzeugen und mit dem Magnetfeld das im Wirkspalt angeordnete magnetorheologische Medium zu beeinflussen, um die Drehbarkeit der Drehkomponenten mit einem Feststellbremsmoment zu bremsen; und umfassend eine Scharniereinrichtung mit zwei relativ zueinander (über einen Schwenkwinkelbereich) schwenkbaren Scharniereinheiten, wobei wenigstens eine der Scharniereinheiten mit einer der Drehkomponenten gekoppelt ist, sodass die Schwenkbarkeit der Scharniereinheiten mittels der Übertragungseinrichtung im Normalbetrieb bzw. bei einem Stellungsveränderungsfall (bei welchem eine relative Stellung der Scharniereinheiten zueinander verändert wird) gezielt (einstellbar) bremsbar ist und sodass die Schwenkbarkeit der Scharniereinheiten mittels der Feststellbremseinrichtung bei einem Feststellbremsfall (bei welchem das Magnetfeld der elektrischen Spuleneinrichtung nicht vorhanden bzw. die Spuleneinrichtung inaktiv ist) gezielt bremsbar ist.

Die Magnetfelderzeugungseinrichtung der Feststellbremseinrichtung ist insbesondere so ausgebildet, wie es vorliegend für die Magnetfelderzeugungseinrichtung der Störfallsicherung beschrieben ist. Insbesondere umfasst die Magnetfelderzeugungseinrichtung wenigstens eine Permanentmagneteinrichtung und/oder wenigstens eine Remanenzeinrichtung oder ist als eine solche ausgebildet. Die Feststellbremseinrichtung ist vorzugsweise (und soweit sinnvoll und ausführbar) wie die Störfallsicherung ausgebildet. Insbesondere ist die elektrische Spuleneinrichtung dazu geeignet und ausgebildet, dem Magnetfeld der Magnetfelderzeugungseinrichtung gezielt entgegen zu wirken, sodass das Feststellbremsmoment bei Bedarf (insbesondere wenigstens im Normalbetrieb bzw. bei einem Stellungsveränderungsfall) wenigstens teilweise eliminiert wird und die relative Stellung der Scharniereinheiten zueinander ohne das Feststellbremsmoment veränderbar ist. Insbesondere ist die Feststellbremseinrichtung dazu geeignet und ausgebildet, die Schwenkbarkeit der Scharniereinheiten an einer beliebigen Winkelstellung eines vorgesehenen Schwenkwinkelbereichs der Scharniereinheiten festzustellen.

Die Drehkomponenten sind insbesondere koaxial zueinander und/oder koaxial zur Drehachse der Übertragungseinrichtung angeordnet. Insbesondere kann eine Drehkomponente als innere Drehkomponente und eine andere Drehkomponente als äußere Drehkomponente bezeichnet werden. Insbesondere kann die innere Drehkomponente und/oder die äußere Drehkomponente mit der Magnetfelderzeugungseinrichtung ausgestattet sein.

Insbesondere ist die Spulenaufnahme an (nur) einer der Drehkomponenten angeordnet. Die Permanentmagneteinrichtung kann an einer oder beiden Drehkomponenten angeordnet sein. Die Permanentmagneteinrichtung kann an derselben Drehkomponente wie die Spulenaufnahme angeordnet sein. Zusätzlich oder alternativ kann die Permanentmagneteinheit an der Drehkomponente angeordnet sein, welche ohne die Spulenaufnahme ausgebildet ist.

Im bestimmungsgemäßen Betriebszustand ist insbesondere eine der Drehkomponenten feststehend ausgebildet und insbesondere an einer Drehmomentabstützung aufgenommen. Insbesondere ist die Drehmomentabstützung eine Widerlagerstruktur (kann auch als Tragstruktur bezeichnet werden) und z. B. Teil einer Karosserie oder einer Konsole oder dergleichen. Insbesondere ist die Spuleneinrichtung und/oder die Zusatzspuleneinrichtung an der feststehenden Drehkomponente angeordnet. Insbesondere verlaufen die Versorgungsleitungen durch die feststehende Drehkomponente. Die feststehende Drehkomponente kann die innere oder die äußere Drehkomponente sein.

In allen Ausgestaltungen ist es bevorzugt, dass das magnetorheologische Medium magnetorheologische Partikel und Gas als Füllmedium umfasst. Insbesondere sind die magnetorheologischen Partikel in Luft aufgenommen. Insbesondere ist das magnetorheologische Medium als ein Pulver ausgebildet. Mit einem solchen magnetorheologischen Medium ermöglicht die hier vorgestellte Erfindung ein besonders geringes Grundmoment. Alternativ ist es denkbar und möglich, dass das magnetorheologische Medium magnetorheologische Partikel und eine Trägerflüssigkeit, wie z. B. Öl, Wasser oder Alkohol, umfasst.

Es ist besonders bevorzugt, dass die magnetorheologischen Partikel (jeweils) überwiegend aus Carbonyleisenpulver oder Derivate davon bestehen. Möglich sind auch andere magnetorheologisch ansprechbare Partikel. Die magnetorheologischen Partikel können Beschichtungen zum Schutz vor Abrieb und/oder Korrosion und/oder zusätzliche Bestandteile aufweisen, um die magnetorheologischen Partikel im Betrieb beständiger, abriebfester und/oder gleitfähiger zu gestalten. Das magnetorheologische Medium und/oder die magnetorheologischen Partikel können z. B. eine Graphitbeigabe umfassen.

Im Rahmen der vorliegenden Erfindung wird unter einem magnetisch nicht leitfähigen Werkstoff insbesondere ein Werkstoff mit einer Permeabilitätszahl von kleiner zehn und vorzugsweise kleiner eins verstanden. Als magnetisch leitfähig werden hier insbesondere Werkstoffe mit einer Permeabilitätszahl von größer zehn und vorzugsweise ferromagnetische Stoffe verstanden. Die magnetische Leitfähigkeit ist dabei die "relative magnetische Permeabilität", die auch vereinfacht "magnetische Permeabilität" genannt wird.

Weitere Vorteile und Merkmale der vorliegenden Erfindung ergeben sich aus den Ausführungsbeispielen, welche im Folgenden mit Bezug auf die beiliegenden Figuren erläutert werden.

Darin zeigen:
- Figur 1: eine rein schematische Darstellung einer erfindungsgemäßen Vorrichtung in perspektivischer Ansicht;
- Figur 2: die Vorrichtung der Fig. 1 in einer geschnittenen Seitenansicht;
- Figur 3: eine weitere Vorrichtung in einer geschnittenen Seitenansicht;
- Figuren 4-5: Detaildarstellungen von Ausgestaltungen der Kupplungseinrichtung nach Fig. 3;
- Figur 6: eine weitere Vorrichtung in einer geschnittenen Seitenansicht;
- Figur 7: die Vorrichtung in einer geschnittenen Vorderansicht; und
- Figur 8: eine rein schematische Prinzipdarstellung einer als Lenkvorgabeeinrichtung ausgebildeten Vorrichtung.

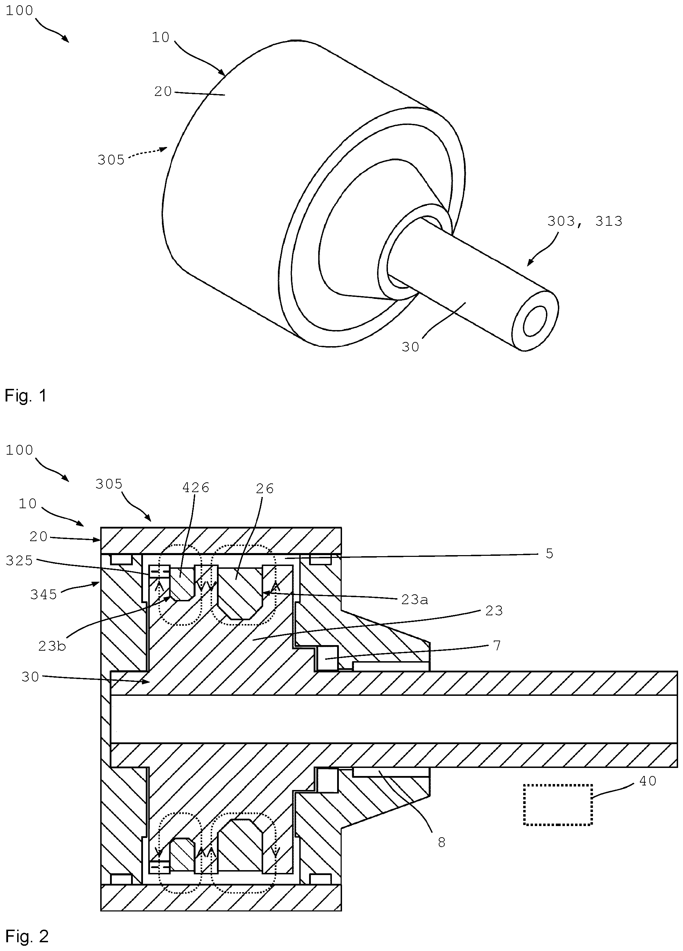

Die Figur 1 zeigt eine erfindungsgemäße Vorrichtung 100 mit einer magnetorheologischen Übertragungseinrichtung 10 mit zwei Drehkomponenten 20, 30 und einer hier nicht sichtbaren Störfallsicherung 305 mit einer Magnetfelderzeugungseinrichtung 345 zum Bremsen der Drehbarkeit der Drehkomponenten 20, 30 bei einem Störfall. Die Dimensionierungen bzw. Verhältnisse sind hier und in den übrigen Figuren aus Gründen der Sichtbarkeit rein schematisch und insbesondere nicht maßstabsgerecht eingezeichnet.

Die Vorrichtung 100 ist hier beispielsweise eine Bedieneinrichtung. Dazu ist die (äußere) Drehkomponente 20 zum Beispiel als ein Drehknopf oder als eine Daumenwalze ausgebildet. Die Übertragungseinrichtung 10 erzeugt dann haptische Feedbacks, während der Drehknopf bzw. die Daumenwalze zur Einstellung von Bedienzuständen gedreht wird.

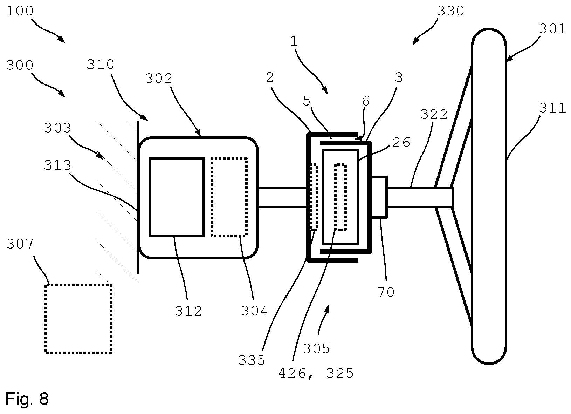

Die Vorrichtung 100 kann aber z. B. auch als eine Lenkvorgabeeinrichtung 300 ausgebildet sein, wie sie mit Bezug zur Fig. 8 näher beschrieben wird. Die Übertragungseinrichtung 10 dient dann z. B. als Aktor einer Steer-by-Wire Lenkeinheit eines Fahrzeugs oder in einem Lenkrad eines Gamecontrollers.

Die (innere) Drehkomponente 30 ist an einer hier nicht näher gezeigten Drehmomentabstützung 303 und beispielsweise einer Widerlagerstruktur 313 (Konsole, Karosserie etc.) drehfest aufgenommen. Die äußere Drehkomponente 20 ist drehbar an der inneren Drehkomponente 30 gelagert. Dazu ist hier eine Lagereinheit 8 und beispielsweise ein Gleitlager vorgesehen (siehe Fig. 2).

Die Fig. 2 zeigt den inneren Aufbau der Vorrichtung 100 der Fig. 1. Zwischen den Drehkomponenten 20, 30 ist ein Wirkspalt 5 ausgebildet, in dem ein magnetorheologisches Medium 6 angeordnet ist. Die Dimensionierung des Wirkspalts 5 ist hier und in den übrigen Figuren aus Gründen der Sichtbarkeit nicht maßstabsgerecht eingezeichnet. Zur Abdichtung des Wirkspalts 5 ist eine Dichtung 7 vorgesehen. Über eine an der inneren Drehkomponente 30 befestigte Spuleneinrichtung 26 wird ein Magnetfeld erzeugt. Das Magnetfeld beeinflusst das Medium 6, sodass die Bewegbarkeit der Drehkomponente 20 mit einem gezielten Drehmoment beaufschlagt wird.

Die Drehkomponente 30 ist mit einer Spulenaufnahme 23 ausgestattet, welche hier zwei Aufnahmeräume 23a, 23b aufweist. Im Aufnahmeraum 23a ist die Spuleneinrichtung 26 für den Betrieb der Kupplungseinrichtung 1 angeordnet. Im Aufnahmeraum 23b befindet sich die (Zusatz-) Spuleneinrichtung 426 der Störfallsicherung 305. Die Magnetkreise sind hier gestrichelt eingezeichnet.

Das Magnetfeld für das Störfallbremsmoment wird durch eine Permanentmagneteinrichtung 325 erzeugt. Zur Aufhebung des Störfallbremsmoments im Normalbetrieb wird das Magnetfeld der Permanentmagneteinrichtung 325 mit einem Magnetfeld der Spuleneinrichtung 426 gezielt überlagert.

Alternativ kann die hier gezeigte Störfallsicherung 305 auch ohne die Permanentmagneteinrichtung 325 ausgestattet sein. Dann wird das Störfallbremsmoment mit der Spuleneinrichtung 426 erzeugt. Dazu ist die Spuleneinrichtung 426 beispielsweise mit einer eigenen separaten Energieversorgung ausgestattet (eigener Energiespeicher und/oder separate Versorgungsleitung).

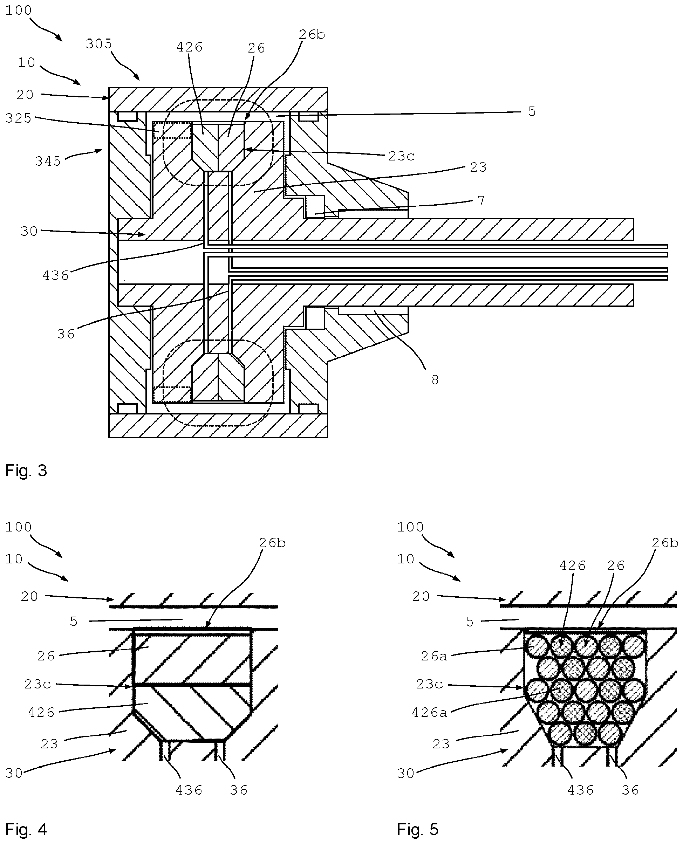

Die Figur 3 zeigt eine Vorrichtung 100, bei welcher die Spuleneinrichtungen 26, 426 in einem gemeinsamen Aufnahmeraum 23c untergebracht sind. Die Spuleneinrichtung 426 kann zur Erzeugung des Magnetfelds bei einem Störfall dienen. Der gemeinsame Magnetkreis ist hier gestrichelt eingezeichnet.

Möglich ist aber auch, dass das Magnetfeld im Störfall mittels einer hier gestrichelt eingezeichneten Permanentmagneteinrichtung 325 bereitgestellt wird. Dann dient die Spulenerrichtung 426 im Normalbetrieb zur Aufhebung bzw. Abschwächung des Magnetfelds der Permanentmagneteinrichtung 325. Die Spuleneinrichtungen 26, 426 sind hier mit jeweils einer eigenen Versorgungsleitung 36, 436 ausgestattet.

Für die Spuleneinrichtungen 26, 426 ist hier eine Wicklungsanordnung 26b vorgesehen, in welcher sie axial nebeneinander im Aufnahmeraum 23c angeordnet sind. Die Spuleneinrichtungen 26, 426 können mittels einer (hier nicht dargestellten) magnetisch nicht leitenden, insbesondere kreisringförmigen, Trennschicht baulich voneinander getrennt im Aufnahmeraum 23c angeordnet sein.

In der Figur 4 ist eine alternative Wicklungsanordnung 26b der Spuleneinrichtungen 26, 426 gezeigt. Dabei ist hier eine koaxiale Wicklungsanordnung 26b vorgesehen, bei welcher die Spuleneinrichtung 26 radial außen und die Spuleneinrichtung 426 radial innen liegt. Bei Bedarf kann auch eine umgekehrte Anordnung vorgesehen sein. Auch hier kann zwischen den Spuleneinrichtungen 26, 426 eine (hier beispielsweise zylindermantelförmige) Trennschicht vorgesehen sein.

In der Figur 5 sind die Spuleneinrichtungen 26, 426 ineinander gewickelt im gemeinsamen Aufnahmeraum 23c untergebracht. Die Spuleneinrichtungen 26, 426 weisen jeweils wenigstens einen elektrisch isolierten Leiter 26a, 426a auf. Bei der Herstellung der Wicklungsanordnung 26b wurden beide Leiter 26a, 426a gleichzeitig in den Aufnahmeraum 23c eingewickelt, sodass sich die hier gezeigte Mehrfachwicklung ergibt. Die Leiter 26a, 426a bzw. Drähte der Spuleneinrichtungen 26, 426 sind hier für bessere Erkennbarkeit stark vergrößert und nicht maßstabsgetreu dargestellt.

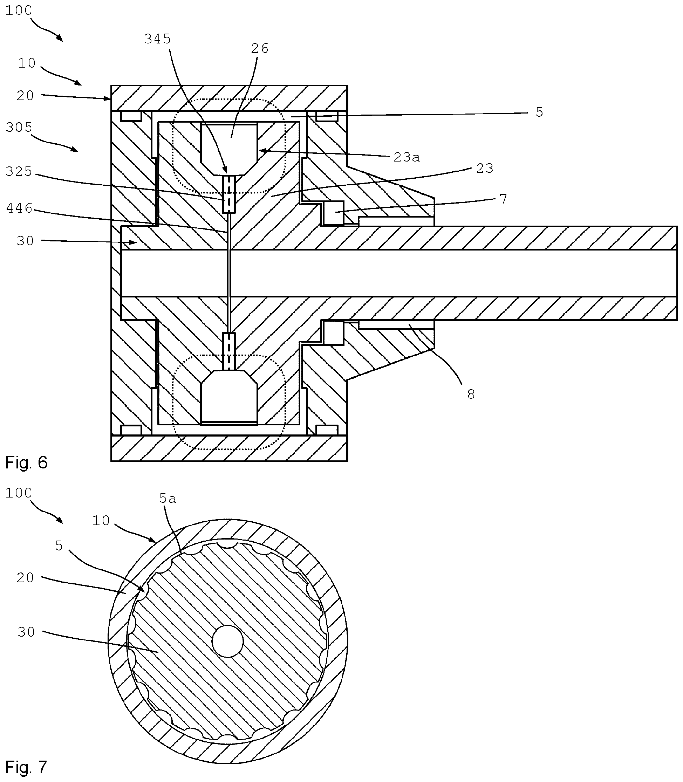

Die Figur 6 zeigt eine Vorrichtung 100, bei welcher die Störfallsicherung 305 eine Permanentmagneteinrichtung 325 aufweist, die radial innerhalb der Spuleneinrichtung 26 angeordnet ist. Die Spuleneinrichtung 26 dient neben ihrer eigentlichen Funktion hier auch zur Abschwächung oder Aufhebung des Magnetfelds der Permanentmagneteinrichtung 325 im Normalbetrieb. Die Permanentmagneteinrichtung 325 ist hier als ein Ringmagnet ausgebildet, welcher sich nach radial innen nur über einen Teil der Drehkomponente 30 erstreckt. Um einen magnetischen Kurzschluss zu verhindern, ist hier radial innerhalb der Permanentmagneteinrichtung 325 eine magnetische Flussbarriere 446 und beispielsweise ein Luftspalt ausgebildet.

Die in den Spalt 5 hineinragenden magnetisch leitfähigen Abschnitte der Drehkomponenten 20, 30 (z. B. axial neben dem Aufnahmeraum 23c) können mit einer umlaufenden Kontur ausgestattet sein. Dadurch ergibt sich in Umfangsrichtung eine unterschiedliche Spalthöhe. Beispielsweise kann eine Sternkontur 5a oder dergleichen vorgesehen sein, wie sie in der Figur 7 gezeigt ist.

Wie in der Fig. 2 skizziert, kann eine interne oder externe Steuereinrichtung 40 vorgesehen sein, um das Magnetfeld der Permanentmagneteinrichtung 325 und/oder der Zusatzspuleneinrichtung 426 im Normalbetrieb zur Unterstützung des Magnetfelds der Spuleneinrichtung 26 heranzuziehen.

Die Figur 8 zeigt eine Vorrichtung 100, welche als Lenkvorgabeeinrichtung 300 zum Steuern eines hier nur teilweise dargestellten Fahrzeugs 330 nach dem Steer-by-Wire-Konzept. Dazu ist eine hier als Lenkrad 311 ausgebildete Lenkeinheit 301 elektrisch bzw. elektronisch mit einer Aktuatoreinrichtung 307 verbunden. Die Aktuatoreinrichtung 307 kann beispielsweise ein oder zwei oder mehr Räder des Fahrzeugs 330 verstellen und dadurch die mit der Lenkeinheit 301 ausgeführte Lenkbewegung in eine Fahrzeugbewegung umsetzen.

Die Bewegung bzw. Stellung der Lenkeinheit 301 und/oder das Drehmoment wird hier mit einer Sensoreinrichtung 70 und beispielsweise mit einem Drehwinkelsensor oder Drehmomentsensor oder einer Kombination aus beidem erfasst.

Die Lenkeinheit 301 ist hier in einen Kraftstrang 310 eingebunden, welcher zudem noch eine Antriebseinrichtung 302 mit einem elektrischen Antriebsmotor 312 und eine magnetorheologische Kupplungseinrichtung 1 mit Kupplungskomponenten 2, 3 umfasst. Die Kupplungseinrichtung 1 und ihre Kupplungskomponenten 2, 3 werden durch die Übertragungseinrichtung 10 mit ihren Drehkomponenten 20, 30 bereitgestellt. Dabei ist die Übertragungseinrichtung 10 hier z. B. so ausgebildet, wie es zuvor beschrieben wurde.

Die Kupplungseinrichtung 1 ist seriell (in Reihe) zur Antriebseinrichtung 302 im Kraftstrang 310 geschaltet, um den Kraftfluss zwischen der Antriebseinrichtung 302 und der Lenkeinheit 301 gezielt verändern zu können.

In dem hier gezeigten Beispiel ist die Kupplungseinrichtung 1 zwischen der Lenkeinheit 301 und der Antriebseinrichtung 302 im Kraftstrang 110 angeordnet. Die Lenkeinheit 301 ist über eine Lenkwelle 322 drehfest mit der Kupplungskomponente 3 verbunden. Die Kupplungskomponente 2 ist drehfest mit der Antriebseinrichtung 302 verbunden. So kann die Kupplungskomponente 2 beispielsweise durch den Antriebsmotor 312 aktiv gedreht werden.

Die Antriebseinrichtung 302 ist hier an einer Widerlagerstruktur 313 des Fahrzeugs 330 befestigt, welche als Drehmomentabstützung 303 für die Antriebseinrichtung 302 dient. Je nachdem, wie der Kraftschluss zwischen den Kupplungskomponenten 2, 3 eingestellt ist, wird das von der Antriebseinrichtung 302 kommende Drehmoment vollständig oder zu einem bestimmten Anteil oder gar nicht auf die Lenkeinheit 101 übertragen.

Um eine besonders starke und noch zuverlässigere Drehmomentabstützung 303 für die Kupplungseinrichtung 1 bereitzustellen, kann die hier gezeigte Lenkvorgabeeinrichtung 300 in einer Weiterbildung mit einer selbsthemmenden Getriebeeinrichtung 304 (z. B. Schneckengetriebe) ausgestattet werden. Die Getriebeeinrichtung 304 ist beispielsweise Teil der Antriebseinrichtung 302 und zwischen dem Antriebsmotor 312 und der Kupplungseinrichtung 1 geschaltet.

Die Störfallsicherung 305 dient hier dazu, dass die Lenkeinheit 301 im Störfall nicht blockiert ist und auch nicht widerstandslos bewegt werden kann. Sie ist z. B. mit der Zusatzspuleneinrichtung 426 und der Permanentmagneteinrichtung 325 und einem eigenen elektrischen Energiespeicher 335 ausgestattet.

Durch die hier vorgestellte Spulenaufnahme 23 bzw. durch die besondere Wicklungsanordnung 26b wird eine besonders sichere und zuverlässige Störfallsicherung 305 bereitgestellt. Zugleich wird nur wenig Bauraum benötigt, sodass eine Unterbringung innerhalb der (inneren) Drehkomponente 30 möglich ist. Durch die Einbindung in einen gemeinsamen Magnetkreis kann mit der Zusatzspuleneinrichtung 426 zudem einer zu starken Bestromung der Spuleneinrichtung 26 im Störfall abgeholfen werden. Dadurch kann deren Magnetfeld bei Bedarf komplett aufgehoben werden.

**Bezugszeichenliste:**

| | | | |
|---|---|---|---|
| 1 | Magnetorheologische Kupplungseinrichtung | 302 | Antriebseinrichtung |
| | | 303 | Drehmomentabstützung |
| 2, 3 | Kupplungskomponente | 304 | Getriebeeinrichtung |
| 4 | Komponente | 305 | Störfallsicherung |
| 5 | Spalt | 307 | Aktuatoreinrichtung |
| 6 | Medium | 310 | Kraftstrang |
| 7 | Dichtung | 311 | Lenkrad |
| 8 | Lagereinheit | 312 | Antriebsmotor |
| 10 | Übertragungseinrichtung | 313 | Widerlagerstruktur |
| 20 | Drehkomponente | 322 | Lenkwelle |
| 23 | Spulenaufnahme | 325 | Permanentmagneteinrichtung |
| 23a | Aufnahmeraum | | |
| 23b | Aufnahmeraum | 330 | Fahrzeug |
| 23c | Aufnahmeraum | 335 | Energiespeicher |
| 26 | Spuleneinrichtung | 345 | Magnetfelderzeugungseinrichtung |
| 26a | Leiter | | |
| 26b | Wicklungsanordnung | 426 | Zusatzspuleneinrichtung |
| 30 | Drehkomponente | 426a | Leiter |
| 36 | Versorgungsleitung | 436 | Versorgungsleitung |
| 40 | Steuereinrichtung | 446 | Flussbarriere |
| 70 | Sensoreinrichtung | | |
| 100 | Vorrichtung | | |
| 300 | Lenkvorgabeeinrichtung | | |
| 301 | Lenkeinheit | | |

## Patentansprüche

1. Vorrichtung (100) umfassend wenigstens eine
magnetorheologische Übertragungseinrichtung (10) mit wenigstens zwei relativ zueinander bewegbaren Drehkomponenten (20, 30), wobei zwischen den Drehkomponenten (20, 30) wenigstens ein Wirkspalt (5) ausgebildet ist und wobei im Wirkspalt (5) ein magnetorheologisches Medium (6) angeordnet ist, und umfassend wenigstens eine elektrische Spuleneinrichtung (26) zur Erzeugung eines steuerbaren Magnetfelds im Wirkspalt (5), um die Drehbarkeit der Drehkomponenten (20, 30) im Normalbetrieb zu beeinflussen, **dadurch gekennzeichnet,**
**dass** wenigstens eine Störfallsicherung (305) zum Bremsen der Drehbarkeit der Drehkomponenten (20, 30) bei einem Störfall umfasst ist und dass die Störfallsicherung (305) dazu geeignet und ausgebildet ist, mittels wenigstens einer Magnetfelderzeugungseinrichtung (345) ein Magnetfeld zu erzeugen und mit dem Magnetfeld das im Wirkspalt (5) angeordnete magnetorheologische Medium (6) zu beeinflussen, um die Drehbarkeit der Drehkomponenten (20, 30) mit einem Störfallbremsmoment zu bremsen.

2. Vorrichtung (100) nach dem vorhergehenden Anspruch, wobei das Magnetfeld der Spuleneinrichtung (26) und das Magnetfeld der Magnetfelderzeugungseinrichtung (345) auf denselben Wirkspalt (5) einwirken.

3. Vorrichtung (100) nach einem der vorhergehenden Ansprüche, wobei das Magnetfeld der Spuleneinrichtung (26) und das Magnetfeld der Magnetfelderzeugungseinrichtung (345) durch die Drehkomponenten (20, 30) und den Wirkspalt (5) verlaufen.

4. Vorrichtung (100) nach einem der vorhergehenden Ansprüche, wobei das Magnetfeld der Spuleneinrichtung (26) und das Magnetfeld der Magnetfelderzeugungseinrichtung (345) wenigstens teilweise durch einen gemeinsamen Magnetkreis verlaufen.

5. Vorrichtung (100) nach einem der vorhergehenden Ansprüche, wobei die Magnetfelderzeugungseinrichtung (345) wenigstens eine elektrische Zusatzspuleneinrichtung (426) zur Erzeugung des Magnetfelds umfasst und wobei die Zusatzspuleneinrichtung (426) kleiner und/oder mit einer geringeren Leistung als die Spuleneinrichtung (26) ausgebildet ist.

6. Vorrichtung (100) nach dem vorhergehenden Anspruch, wobei die Zusatzspuleneinrichtung (426) und die Spuleneinrichtung (26) jeweils wenigstens eine separate Versorgungsleitung (36, 436) zur Versorgung mit Energie aufweisen und/oder wobei die Störfallsicherung (305) wenigstens einen Energiespeicher (335) zur Energieversorgung der Zusatzspuleneinrichtung (426) umfasst und wobei der Energiespeicher (335) eine Energieversorgung bereitstellt, welche von einer Energieversorgung der Spuleneinrichtung (26) unabhängig ist.

7. Vorrichtung (100) nach einem der beiden vorhergehenden Ansprüche, wobei wenigstens eine der Drehkomponenten (20, 30) wenigstens eine Spulenaufnahme (23) aufweist, in welcher die Spuleneinrichtung (26) untergebracht ist und wobei in der Spulenaufnahme (23) auch die Zusatzspuleneinrichtung (426) untergebracht ist.

8. Vorrichtung (100) nach dem vorhergehenden Anspruch, wobei die Spulenaufnahme (23) einen gemeinsamen Aufnahmeraum (23c) für die Spuleneinrichtung (26) und die Zusatzspuleneinrichtung (426) aufweist oder wobei die Spulenaufnahme (23) wenigstens einen Aufnahmeraum (23a) für die Spuleneinrichtung (26) und wenigstens einen Aufnahmeraum (23b) für die Zusatzspuleneinrichtung (426) aufweist.

9. Vorrichtung (100) nach einem der vier vorhergehenden Ansprüche, wobei die Spuleneinrichtung (26) und die Zusatzspuleneinrichtung (426) in einer gemeinsamen Wicklungsanordnung (26b) untergebracht sind und wobei die Spuleneinrichtung (26) und die Zusatzspuleneinrichtung (426) in der Wicklungsanordnung (26b) axial nebeneinander aufgewickelt oder koaxial zueinander aufgewickelt oder ineinander gewickelt sind.

10. Vorrichtung (100) nach einem der vorhergehenden Ansprüche, wobei die Magnetfelderzeugungseinrichtung (345) wenigstens eine Permanentmagneteinrichtung (325) zur Bereitstellung des Magnetfelds umfasst und wobei die Störfallsicherung (305) dazu geeignet und ausgebildet ist, das Magnetfeld der Permanentmagneteinrichtung (325) im Normalbetrieb mittels der Spuleneinrichtung (26) und/oder der Zusatzspuleneinrichtung (426) abzuschwächen oder zu eliminieren.

11. Vorrichtung (100) nach dem vorhergehenden Anspruch, wobei die Permanentmagneteinrichtung (325) axial neben der Spuleneinrichtung (26) und/oder der Zusatzspuleneinrichtung (426) angeordnet ist.

12. Vorrichtung (100) nach einem der beiden vorhergehenden Ansprüche, wobei die Permanentmagneteinrichtung (325) in radialer Richtung von der Spuleneinrichtung (26) und/oder der Zusatzspuleneinrichtung (426) umschlossen ist oder wobei die Permanentmagneteinrichtung (325) in radialer Richtung die Spuleneinrichtung (26) und/oder die Zusatzspuleneinrichtung (426) umschließt.

13. Vorrichtung (100) nach einem der drei vorhergehenden Ansprüche, wobei der Permanentmagneteinrichtung (325) wenigstens eine magnetische Flussbarriere (446) zugeordnet ist, welche einen magnetischen Kurzschluss zwischen der Permanentmagneteinrichtung (325) und der die Permanentmagneteinrichtung (325) tragenden Drehkomponente (20, 30) verhindert und wobei die Permanentmagneteinrichtung (325) und die Flussbarriere (446) koaxial zueinander angeordnet sind.

14. Vorrichtung (100) nach Anspruch 5 wobei die Störfallsicherung (305) dazu geeignet und ausgebildet ist, das Magnetfeld der Spuleneinrichtung (26) mittels der Zusatzspuleneinrichtung (426) zu verringern, um bei einem Störfall einer unerwünscht großen Bremswirkung entgegenzuwirken.

15. Vorrichtung (100) nach einem der vorhergehenden Ansprüche oder nach dem Oberbegriff von Anspruch 1, umfassend wenigstens eine Steuereinrichtung (40), welche dazu geeignet und ausgebildet ist, das Magnetfeld der Magnetfelderzeugungseinrichtung (345) im Normalbetrieb zur Unterstützung des Magnetfelds der Spuleneinrichtung (26) heranzuziehen.

## Claims

1. An apparatus (100) comprising at least one magnetorheological transmission device (10) with at least two rotary components (20, 30) that are movable relative to one another, wherein at least one working gap (5) is formed between the rotary components (20, 30) and a magnetorheological medium (6) is arranged in the working gap (5), and comprising at least one electrical coil device (26) for generating a controllable magnetic field in the working gap (5) in order to influence the rotatability of the rotary components (20, 30) during normal operation,
**characterized in**
**that** at least one failure protection element (305) is provided for decelerating the rotatability of the rotary components (20, 30) in the event of a failure, and in that the failure protection element (305) is suitable and designed for generating a magnetic field by means of at least one magnetic field generation device (345) and for influencing the magnetorheological medium (6) arranged in the working gap (5) with the magnetic field in order to decelerate the rotatability of the rotary components (20, 30) with a failure braking torque.

2. The apparatus (100) according to the preceding claim, wherein the magnetic field of the coil device (26) and the magnetic field of the magnetic field generation device (345) act upon the same working gap (5).

3. The apparatus (100) according to one of the preceding claims, wherein the magnetic field of the coil device (26) and the magnetic field of the magnetic field generation device (345) extend through the rotary components (20, 30) and the working gap (5).

4. The apparatus (100) according to one of the preceding claims, wherein the magnetic field of the coil device (26) and the magnetic field of the magnetic field generation device (345) extend at least partially through a common magnetic circuit.

5. The apparatus (100) according to one of the preceding claims, wherein the magnetic field generation device (345) comprises at least one electrical auxiliary coil device (426) for generating the magnetic field, and wherein the auxiliary coil device (426) is designed smaller and/or with a lower output than the coil device (26).

6. The apparatus (100) according to the preceding claim, wherein the auxiliary coil device (426) and the coil device (26) respectively have at least one separate supply line (36, 436) for being supplied with energy and/or wherein the failure protection element (305) comprises at least one energy storage (335) for the energy supply of the auxiliary coil device (426), and wherein the energy storage (335) provides an energy supply that is independent of an energy supply of the coil device (26).

7. The apparatus (100) according to one of the two preceding claims, wherein at least one of the rotary components (20, 30) has at least one coil receptacle (23), in which the coil device (26) is accommodated, and wherein the auxiliary coil device (426) is also accommodated in the coil receptacle (23).

8. The apparatus (100) according to the preceding claim, wherein the coil receptacle (23) has a common receptacle space (23c) for the coil device (26) and the auxiliary coil device (426) or wherein the coil receptacle (23) has at least one receptacle space (23a) for the coil device (26) and at least one receptacle space (23b) for the auxiliary coil device (426).

9. The apparatus (100) according to one of the four preceding claims, wherein the coil device (26) and the auxiliary coil device (426) are accommodated in a common winding arrangement (26b), and wherein the coil device (26) and the auxiliary coil device (426) are wound up axially adjacent to one another or coaxially to one another or wound into one another in the winding arrangement (26b).

10. The apparatus (100) according to one of the preceding claims, wherein the magnetic field generation device (345) comprises at least one permanent magnet device (325) for making available the magnetic field, and wherein the failure protection element (305) is suitable and designed for weakening or eliminating the magnetic field of the permanent magnet device (325) by means of the coil device (26) and/or the auxiliary coil device (426) during normal operation.

11. The apparatus (100) according to the preceding claim, wherein the permanent magnet device (325) is arranged axially adjacent to the coil device (26) and/or the auxiliary coil device (426).

12. The apparatus (100) according to one of the two preceding claims, wherein the permanent magnet device (325) is enclosed by the coil device (26) and/or the auxiliary coil device (426) in the radial direction or wherein the permanent magnet device (325) encloses the coil device (26) and/or the auxiliary coil device (426) in the radial direction.

13. The apparatus (100) according to one of the three preceding claims, wherein at least one magnetic flux barrier (446) is assigned to the permanent magnet device (325), wherein said magnetic flux barrier prevents a magnetic short circuit between the permanent magnet device (325) and the rotary component (20, 30) carrying the permanent magnet device (325), and wherein the permanent magnet device (325) and the flux barrier (446) are arranged coaxially to one another.

14. The apparatus (100) according to claim 5, wherein the failure protection element (305) is suitable and designed for reducing the magnetic field of the coil device (26) by means of the auxiliary coil device (426) in order to counteract an undesirably strong braking effect in the event of a failure.

15. The apparatus (100) according to one of the preceding claims or according to the preamble of claim 1, comprising at least one control device (40) that is suitable and designed for using the magnetic field of the magnetic field generation device (345) for supporting the magnetic field of the coil device (26) during normal operation.

## Revendications

1. Dispositif (100), comprenant au moins un système de transmission (10) magnétorhéologique, doté d'au moins deux composants rotatifs (20, 30) déplaçables l'un par rapport à l'autre, entre les composants rotatifs (20, 30) étant conçue au moins une fente active (5) et dans la fente active (5) étant placé un agent (6) magnétorhéologique et comprenant au moins un système de bobine (26) électrique, destiné à générer un champ magnétique susceptible d'être commandé dans la fente active (5), pour influencer l'aptitude à la rotation des composants rotatifs (20, 30) en fonctionnement normal, **caractérisé**
**en ce qu'**il est compris au moins une sécurité en cas de dysfonctionnement (305), destinée à freiner l'aptitude à la rotation des composants rotatifs (20, 30) en cas de dysfonctionnement et **en ce que** la sécurité en cas de dysfonctionnement (305) est adaptée et conçue pour générer un champ magnétique au moyen d'au moins système générateur (345) d'un champ magnétique et à influencer par le champ magnétique l'agent (6) magnétorhéologique placé dans la fente active (5), pour freiner l'aptitude à la rotation des composants rotatifs (20, 30) avec un couple de freinage de cas de dysfonctionnement.

2. Dispositif (100) selon la revendication précédente, le champ magnétique du système de bobine (26) et le champ magnétique du système générateur (345) d'un champ magnétique agissant sur la même fente active (5) .

3. Dispositif (100) selon l'une quelconque des revendications précédentes, le champ magnétique du système de bobine (26) et le champ magnétique du système générateur (345) d'un champ magnétique s'écoulant à travers les composants rotatifs (20, 30) et la fente active (5).

4. Dispositif (100) selon l'une quelconque des revendications précédentes, le champ magnétique du système de bobine (26) et le champ magnétique du système générateur (345) d'un champ magnétique s'écoulant au moins en partie à travers un circuit magnétique commun.

5. Dispositif (100) selon l'une quelconque des revendications précédentes, le système générateur (345) d'un champ magnétique comprenant au moins un système de bobine (426) électrique supplémentaire, destiné à générer le champ magnétique et le système de bobine (426) supplémentaire étant plus petit que et/ou conçu avec une puissance moindre que celle du système de bobine (26).

6. Dispositif (100) selon la revendication précédente, le système de bobine (426) supplémentaire et le système de bobine (26) comportant chacun au moins une conduite d'alimentation (36, 436) séparée pour l'alimentation en énergie et/ou la sécurité en cas de dysfonctionnement (305) comprenant au moins un accumulateur d'énergie (335) pour l'alimentation énergétique du système de bobine (426) supplémentaire et l'accumulateur d'énergie (335) mettant à disposition une alimentation énergétique, laquelle est indépendante d'une alimentation énergétique du système de bobine (26).

7. Dispositif (100) selon l'une quelconque des deux revendications précédentes, au moins l'un des composants rotatifs (20, 30) comportant au moins un porte-bobine (23) dans lequel est logé le système de bobine (26) et dans le porte-bobine (23) étant également logé le système de bobine (426) supplémentaire.

8. Dispositif (100) selon la revendication précédente, le porte-bobine (23) comportant un espace de logement (23c) commun pour le système de bobine (26) et le système de bobine (426) supplémentaire ou le porte-bobine (23) comportant au moins un espace de logement (23a) pour le système de bobine (26) et au moins un espace de logement (23b) pour le système de bobine (426) supplémentaire.

9. Dispositif (100) selon l'une quelconque des quatre revendications précédentes, le système de bobine (26) et le système de bobine (426) supplémentaire étant logés dans un ensemble d'enroulements (26b) commun et le système de bobine (26) et le système de bobine (426) supplémentaire étant enroulés dans l'ensemble d'enroulements (26b) côte à côte en direction axiale ou de manière coaxiale l'un par rapport à l'autre ou l'un dans l'autre.

10. Dispositif (100) selon l'une quelconque des revendications précédentes, le système générateur (345) d'un champ magnétique comprenant au moins un système d'aimant permanent (325), destiné à mettre à disposition le champ magnétique et la sécurité en cas de dysfonctionnement (305) étant adaptée et conçue pour affaiblir ou éliminer le champ magnétique du système d'aimant permanent (325) en fonctionnement normal, au moyen du système de bobine (26) et/ou du système de bobine (426) supplémentaire.

11. Dispositif (100) selon la revendication précédente, le système d'aimant permanent (325) étant placé en direction axiale à côté du système de bobine (26) et/ou du système de bobine (426) supplémentaire.

12. Dispositif (100) selon l'une quelconque des deux revendications précédentes, le système d'aimant permanent (325) étant entouré en direction radiale par le système de bobine (26) et/ou par le système de bobine (426) supplémentaire ou le système d'aimant permanent (325) entourant en direction radiale le système de bobine (26) et/ou le système de bobine (426) supplémentaire.

13. Dispositif (100) selon l'une quelconque des trois revendications précédentes, au système d'aimant permanent (325) étant associée au moins une barrière de flux (446) magnétique, laquelle empêche un court-circuit magnétique entre le système d'aimant permanent (325) et le composant rotatif (20, 30) portant le système d'aimant permanent (325) et le système d'aimant permanent (325) et la barrière de flux (446) étant placés de manière coaxiale l'un par rapport à l'autre.

14. Dispositif (100) selon la revendication 5, la sécurité en cas de dysfonctionnement (305) étant adaptée et conçue pour réduire le champ magnétique du système de bobine (26) au moyen du système de bobine (426) supplémentaire, pour contrecarrer en cas de dysfonctionnement un effet de freinage trop important non souhaitable.

15. Dispositif (100) selon l'une quelconque des revendications précédentes ou selon le préambule de la revendication 1, comprenant au moins un système de commande (40), lequel est adapté et conçu pour avoir recours au champ magnétique du système générateur (345) d'un champ magnétique en fonctionnement normal, pour assister le champ magnétique du système de bobine (26).
